# EUROPEAN PATENT APPLICATION

(11) **EP 2 960 799 A1**
(43) Date of publication of application: **30.12.2015**
(21) Application number: 15001735.8
(22) Date of filing: 11.06.2015
(51) Int. Cl.: G06F 11/36

(54) **DEFECT LOCALIZATION IN SOFTWARE INTEGRATION TESTS**

(30) Priority: 24.06.2014 US 201414313029
(71) Applicant: SAP SE, 69190 Walldorf (DE)
(72) Inventor: Heymann, Juergen, 69190 Walldorf (DE); Meyer, Petra, 69190 Walldorf (DE); Jansen, Thomas, 69190 Walldorf (DE)
(74) Representative: Müller-Boré & Partner Patentanwälte PartG mbB

(57) **Abstract**

Defect localization can be performed in integration tests to more efficiently determine if recent source code changes caused a defect. Change locations are identified that represent code changes (e.g., source code changes) that occurred since a last integration test run. Code coverage information can be obtained indicating lines of code actually tested during the integration test. A search can be performed to find an intersection between the code changes and the code actually tested to determine one or more candidate code changes that may have caused a defect in the integration test. The candidate code changes can be ranked based on one or more different ranking algorithms.

## Description

### BACKGROUND

In computer programming, unit testing is a software testing method by which individual units of source code, sets of one or more computer program modules together with associated control data, usage procedures, and operating procedures are tested to determine if they are fit for use. One can view a unit as the smallest testable part of an application.
In procedural programming, a unit could be an entire module, but it is more commonly an individual function or procedure. In object-oriented programming, a unit is often an entire interface, such as a class, but could be an individual method. Unit tests are typically short code fragments created by programmers during the development process.

Integration testing is software testing in which individual units of source code are combined and tested as a group. Integration testing occurs after unit testing and before validation testing (wherein a check is performed to determine if the product complies with specifications). Integration testing takes as its input, modules that have been unit tested, groups them in larger aggregates, applies tests defined in an integration test plan to those aggregates, and delivers as its output the integrated system ready for system testing. The integration testing can take hours to run in large systems.

During integration testing, when an error occurs it is difficult to know what software changes caused the error. For example, in large systems many developers have submitted changes to different units and it can be very difficult to determine which of the many changes since the last successful run caused the error. Developers need to manually review program traces in order to determine how the problem occurred. Little guidance is provided and often experience and luck can be factors in resolving the problem. This makes diagnosis of integration test failures very expensive and diminishes the return on investment in the integration test.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In one embodiment, defect localization can be performed in integration tests to more efficiently determine if recent code changes (e.g., source code changes) caused a defect. Change locations are identified that represent code changes that occurred since a last integration test run. Code coverage information can be obtained indicating lines of code actually tested during the integration test. A search can be performed to find an intersection between the code changes and the code actually tested to determine one or more candidate code changes that may have caused a defect in the integration test.

In another embodiment, which can supplement the other embodiments, the candidate code changes can be ranked based on one or more different ranking algorithms. The ranking algorithms can be based on a number of measured parameters, such as code changes that were most frequently exercised in failed tests or a size of the source code change as measured by lines of code changed. Different combinations of ranking algorithms can be used based on these parameters.

The foregoing and other objects, features, and advantages of the invention will become more apparent from the following detailed description, which proceeds with reference to the accompanying figures.

### BRIEF DESCRIPTION OF THE DRAWINGS

FIG. 1 is an embodiment of a system that can be used to localize defects during software integration tests.
FIG. 2 is a flowchart of a method according to one embodiment that can be used with the system of FIG. 1 for localizing defects.
FIG. 3 is a flowchart of a method according to another embodiment wherein multiple heuristics can be used to generate an ordered list of candidate source code revisions that caused a defect.
FIG. 4 is a flowchart according to another embodiment for localizing defects during integration testing.
FIG. 5 is a flowchart according to yet another embodiment for localizing defects during integration testing.
FIG. 6 is a table illustrating a simple example implementation for localizing defects.
FIG. 7 depicts a generalized example of a suitable computing environment in which the described innovations may be implemented.

### DETAILED DESCRIPTION

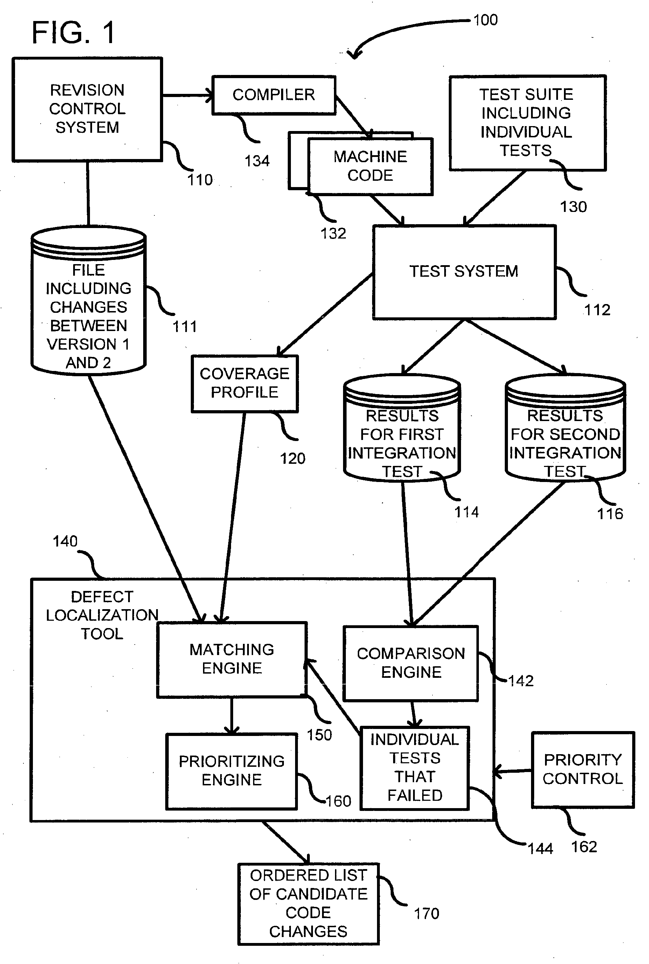

FIG. 1 shows an overall system 100 according to one embodiment for localizing defects during software integration tests. A revision control system 110 can be a standard revision control system known in the art. The revision control system is a source code versioning system that holds source code (e.g. files) and records which changes were made when and by whom. The versioning provides information regarding what source files/objects were changed (e.g., such as what lines changed, what procedures changed, etc.) between two points in time. These 'source changes' include not only source code of programs but also configuration files and other artifacts that can affect the behavior of a program. The source changes can be stored in a database 111, which in the illustrated embodiment is showing two versions of code (i.e., version 1 and 2) and the changes there between. Other versions and associated changes can also be stored therein.

The system 100 can also include a test system 112, which is also a common system known in the art. The test system 112 exercises or executes the code (source code and configuration data) to determine the correct behavior of the system. The test system 112 can output a resulting status (e.g., passed/failed) for each test that was run. The results can be stored in one or more databases, such as databases 114, 116, for example. The test system 112 can also measure which parts of the source code were actually used in a test run. Typically, the test system 112 can output a coverage profile 120 indicating which lines of the code were exercised (i.e., executed) or which configuration parameters were used. Alternatively or additionally, the coverage profile 120 can indicate which subroutines were used or program modules (e.g., objects) (i.e., multiple lines of code logically grouped together).

The test system 112 can receive multiple inputs. A first input 130 can include a test suite including a set of two or more individual tests. The test system 112 can also take as input the code to be tested, which is output from the revision control system 110. In this example, the code is one or more versions of machine code 132, which is compiled by a compiler 134. Although shown separately, the compiler 134 can also be integrated into the revision control system 110. Additionally, although not shown, the revision control system 110 can provide interpreted code directly to the test system 112 to be tested.

The test system 112 performs the tests in the test suite 130 on the versions of code 132. Multiple runs of the integration tests can be performed. In the example of system 100, two separate runs are shown, one for a first version of code and one for a second version of code. Typically, the second version of code is the same as the first version, but with updates. The outputs from the test system include results 114 for the first run and results 116 for the second run. The results 114, 116 include results for the individual tests that make up the test suite.

A defect localization tool 140 can receive as inputs the file 111 including changes between the first version of code and the second version of code, the coverage profile 120, and the results 114, 116 of the first and second integration tests. Other inputs can also be used depending on the particular application. The defect localization tool 140 can include a comparison engine 142 that determines which of the individual tests from the test suite 130 passed on a first run, but failed on the second run. The subset of tests resulting from that determination can be stored in memory location, shown at 144.

A matching engine 150 can read the results 144 from the comparison engine 142. In an alternative embodiment, the matching engine 150 can read results directly from the comparison engine. For the tests identified at 144, the matching engine 150 obtains the code that changed between versions 1 and 2 from the database 111. For example, the code that changed can be indicated by line numbers. Those code changes are then searched for in the coverage profile 120 for the second integration test. If there is a match, it indicates code that was changed between revisions and was exercised by the test system, meaning the test system executed those lines of code as part of the testing procedure. The result is a subset of file 111, wherein the subset includes source code revisions that were exercised by the test system during the second integration test. The subset thereby includes a plurality of candidate errors. Typically, lines of source code that are consecutive can be considered as a group and are identified together as a candidate error.

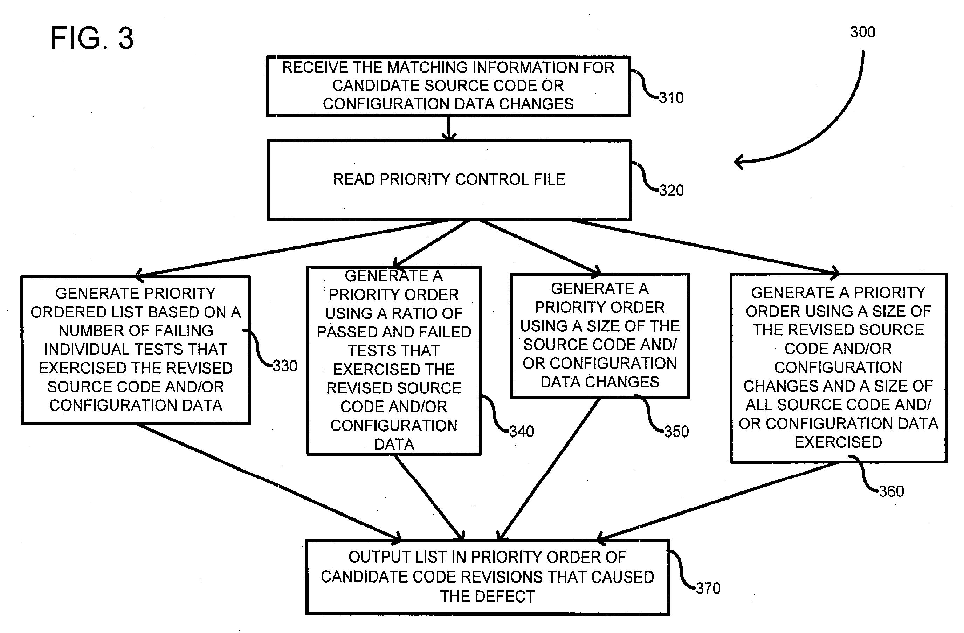

The candidate errors can be organized into an ordered list according to a priority of which code changes might have caused an error. A prioritizing engine 160 can organize the candidate errors in an order based on a number of possible heuristic models. A priority control 162 can be used to control which model is used. Generally, the priority ranking is based on how many individual tests used the code associated with the candidate error or a size of the code. Detailed examples of different models are explained further below in relation to FIG. 3. The results of the prioritization can be output as an ordered list of candidate code changes 170 that caused the error.

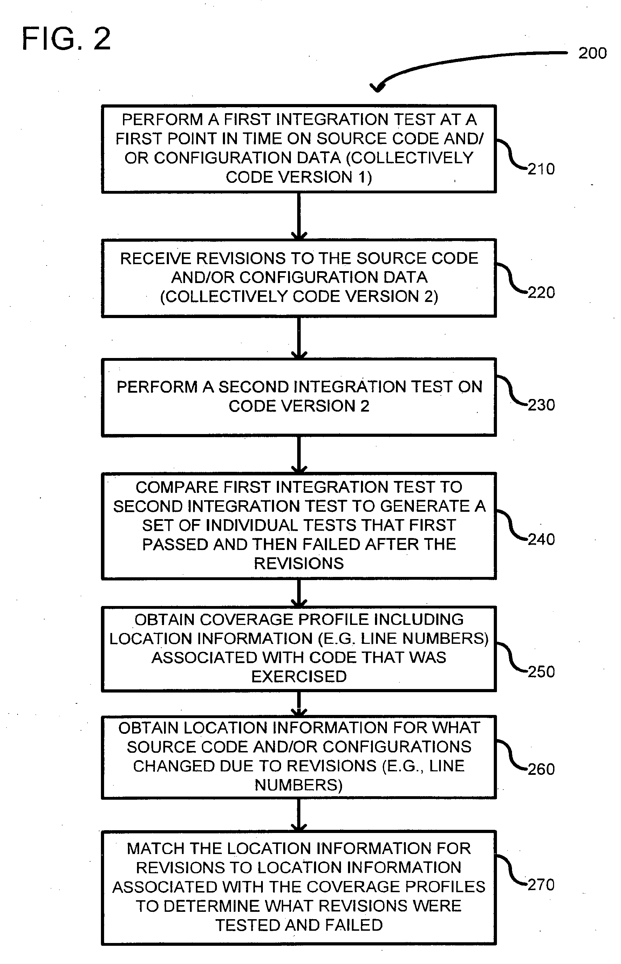

FIG. 2 shows a flowchart 200 according to one embodiment that can be used in conjunction with FIG. 1. In process block 210, a first integration test can be performed during a first period of time on source code and/or configuration data, which together form a version 1 of code. For example, referring again to FIG. 1, the revision control system 110 can either provide machine code 132, which is compiled, or code that can be interpreted to the test system 112. The test system 112 can, in turn, perform the first integration test using the test suite 130 to execute a plurality of individual tests. The results of the test can be stored in a database 114. The results typically include whether each individual test in the test suite 130 passed or failed the test. In process block 220, revisions can be received to the source code and/or configuration data. For example, developers can insert updates into the revision control system 110 in order to generate a new version of the code (called Version 2 in the example). The revision control system can automatically track those updates and provide an output file 111 showing changes. The new version of the code can again be passed to the test system 112 in a similar manner to Version 1.

In process block 230, a second integration test can be performed on Version 2 of the code. Like the first integration test, the second integration test can be performed by the test system 112. Typically, the test system uses the same test suite 130 that was used for Version 1 testing. The results of the second integration test can be stored in the database 116 and can include results for each individual test in the test suite including whether each individual test passed or failed. The second integration test is executed during a second period of time T2 and the first integration test is performed during time T1, earlier than T2. In between these two time periods, software revisions occurred to the code. Often, the software revisions themselves can cause new errors causing the individual tests to fail.

In process block 240, the first integration test is compared to the second integration test. In performing the comparison, the results of each individual test in the test suite are compared to see which of the individual tests previously passed, but are now failing. There is a high probability that source code changes made between T1 and T2 caused the error to occur. This comparison can be performed by the comparison engine 142, which reads the first integration test results 114 and the second integration test results 116 and generates an output 144 indicating a subset of the individual tests that first passed, but are now failing.

In process block 250, the coverage profile can be obtained. For example, the coverage profile typically includes information indicating the particular routines or lines of code that were executed during the second integration test. To obtain the coverage profile, the matching engine 150 can either read the coverage profile from the test system 112 directly, or the read the coverage profile from a database. In some embodiments, the coverage profile can be stored in the database 116 linked to the integration test results. In process block 260, location information can be obtained indicating what source code and/or configurations changed due to the revisions. For example, the matching engine 150 can read the revision control system 110 directly to obtain the location information, or it can read a database 111. In process block 270, the location information for the revisions can be matched to the location information associated with the coverage profile. For example, a line number associated with the code can be searched in the coverage profile. For groups of consecutive source code lines, typically the first line number in the group is searched for the coverage profile. If there is a match, then it is determined that a source code change has been exercised by the test system. Therefore, that source code change can be considered a candidate source code change causing an error in the integration tests. Multiple source code changes can be determined and included as additional candidate errors.

FIG. 3 is a flowchart 300 of a method for prioritizing candidate errors found by the matching engine 150. The flowchart 300 can be performed by the prioritizing engine 160 to generate the ordered list of candidate code changes including source code changes and/or configuration changes. At process block 310, matching information can be received for matching candidate source code or configuration data changes that caused an error in the integration test. For example, the matching information can be received from the matching engine 150. In process block 320, a priority control file 162 can be read. Based on configuration data in the priority control file, the prioritizing engine 160 can take one of multiple paths indicated by different process blocks 330, 340, 350 and 360. Each of these different paths outputs a list in priority order of candidate source code revisions that caused the error or defect (process block 370).

In process block 330, a priority ordered list is generated based on a number of failing individual tests that exercised the revised source code and/or configuration data. In this process, for each source code change, an identification is made for individual tests from the test suite 130 that passed during integration test 1 and failed during integration test 2 (hereinafter called "red tests"). Any individual test that passed integration test 1 and integration test 2 is considered a "green test". Then a count is calculated for the number of red tests that exercised each source code change. The count that is the highest number is considered the most likely cause and is at the top of the priority list. Subsequent candidate errors are added to the list in order based on their associated count.

In process block 340, a priority ordered list can be generated using a ratio of passed and failed tests that exercised the revised source code and/or configuration data. Thus, a count can be calculated for red tests and green tests that exercised the candidate code. The ranking can be defined by a ratio of red/green tests. A code change with the highest ratio is the most likely cause of the defect. Subsequent candidate errors are added to the list in order based on their associated ratio.

In process block 350, a priority ordered list can be generated using a size of changes in the source code and/or configuration data. For example, a number of lines changed, items changed, procedures changed, etc. can be used in determining the priority order. The largest change can be considered the most likely cause of the defect. Subsequent candidate errors can also be sorted based on size.

In process block 360, a priority ordered list can be generated using a size of the revised source code and/or configuration changes and a size of all source code and/or configuration data exercised. Thus, for example, a number code changes in each failed test can be divided by the total size of the code exercised (i.e., the covered code) in the test. A code change in a small code coverage profile has a higher probability of impact than the same change in a very large code coverage profile.

Other processes than 330, 340, 350 and 360 or a combination thereof can be used. Nonetheless, whichever is used, a list can be outputted in a priority order of candidate code revisions that caused the defect (process block 370).

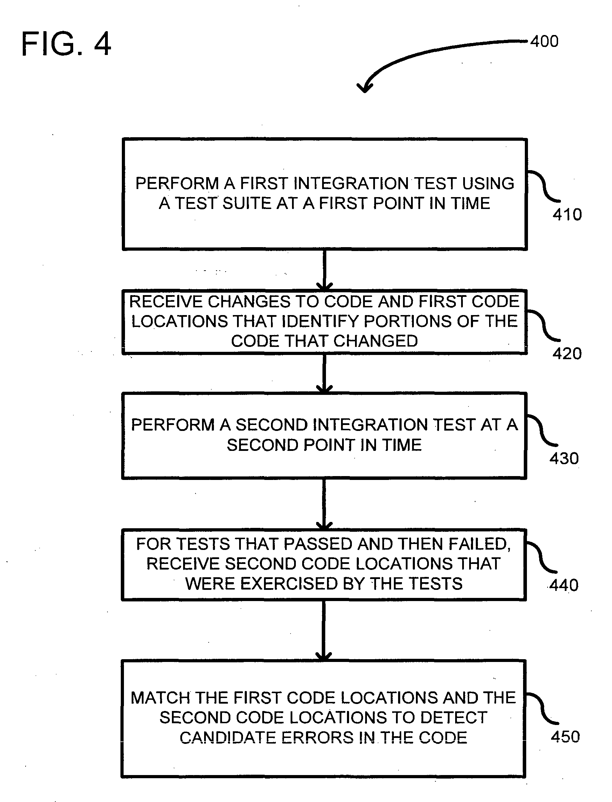

FIG. 4 is a flowchart 400 of a method that can be used for localizing defects in integration testing. In process block 410, a first integration test can be performed using a test suite at a first point in time (T1). As previously described, the test system 112 can read the test suite and use individual tests therein to test a first version of the code. In process block 420, changes to the code and locations associated with those changes (called first code locations) are received. For example, developers can update the code to include new functionality or apply improvements or fixes to existing functionality. Capturing data associated with changes is a standard output of available revision control systems, such as is shown at 110. In process block 430, a second integration test can be performed at a second point in time (T2). The second integration test uses the same test suite as the first integration test, but exercises the second version of the code, including the changes from process block 420. In process block 440, for tests that passed and then failed, second code locations that were exercised by the tests are received. It should be recognized that the first code locations can be locations, such as line numbers, in the source code, while the second code locations can be locations, such as line numbers, in object code. Nonetheless, both the first and second locations can correspond to a same portion of the code. Thus, line numbers associated with the source code can correspond to line numbers in the object code, as both are different representations of the same thing. In process block 450, the first code locations can be searched for in the file containing the second code locations to find matching locations. In one example, line numbers associated with source code revisions can be searched for in a coverage profile in order to find matching location data indicating source code that was exercised by the second integration test.

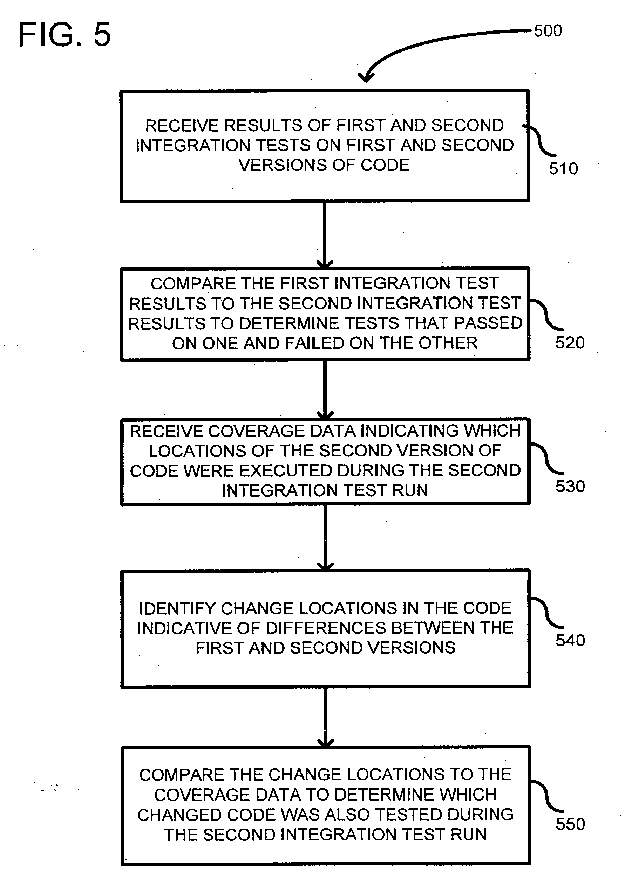

FIG. 5 is a flowchart 500 according to another embodiment for localizing defects during integration testing. In process block 510, results can be received relating to the first and second integration tests on first and second versions of code, respectively. Typically, updates were performed on the first version of code to obtain the second version of code. The first and second versions could be any versions of the code, but first and second refer to a time sequence wherein one is developed before the other.

In process block 520, the first integration test results are compared to the second integration test results to determine individual tests that failed in the second integration tests after passing in the first integration tests. In process block 530, coverage data is received indicating which locations of the second version of the code were executed during the second integration test run. In process block 540, code change locations are identified indicative of new code changes added between the first and second integration tests. The code change locations can be obtained from the revision control system. In process block 550, change locations can be compared to the coverage data to determine which changed code was also tested during the second integration test run. An intersection between the changed code and the tested code is all that is needed to identify the changed code as a candidate error in the code.

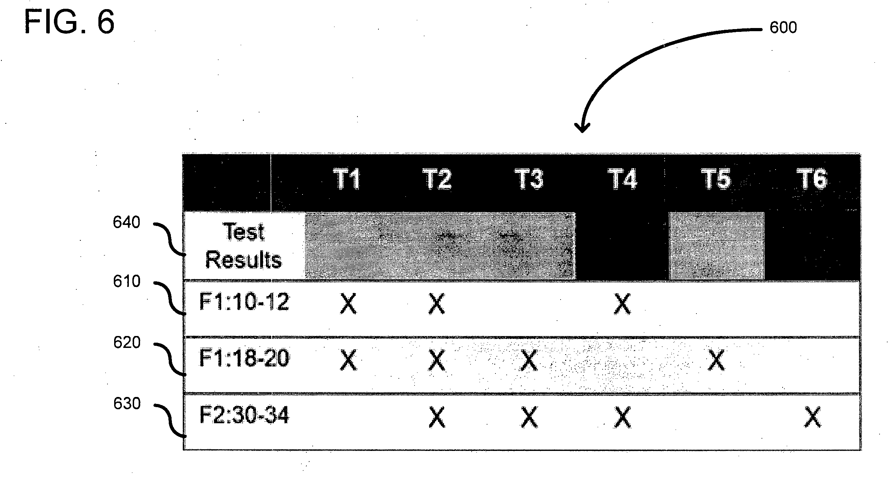

FIG. 6 is an example of illustrating how candidate code sections can be identified and prioritized. Specifically, a code coverage table is shown at 600 that includes multiple rows, each one including source code lines. In this example, two files F1 and F2 were changed. As shown at 610, lines 10-12 were changed in F 1. As shown at 620, F1 was changed at lines 18-20. Finally, at 630, F2 was changed at lines 30-34. Only three code changes are shown for ease of illustration, as in a typical design environment, there are hundreds or thousands of changes. Integration tests are executed two times, and include 6 individual tests T1-T6. Any number of tests can be used. In the row 640, the test results are shown for the two test runs. Tests T1, T2, T3 and T5 passed the first integration test and the second integration tests. However, T4 and T6 are shown as having passed the first integration test and failed the second integration test (through indication by a darker color box). Each of the rows 610, 620, and 630 shows which source code changes were exercised by individual tests through an X designation. The code coverage table 600 shows that T4 exercised both source code sections 610 and 630, but did not exercise 620. Therefore, source code section 620 could not have caused the error in T4. The other failing test, T6, only exercised source code section 630. Therefore, both source code sections 610 and 630 are considered candidates that could have caused the defect. On the contrary, source code section 620 was not exercised by either T4 or T6 and cannot be a candidate.

A ranking of the candidate source code sections 610, 630 can be performed. In one example ranking (described above in relation to 330 in FIG. 3), as two failing tests T4, T6 exercised the source code 630 and only T4 exercised 610, the code 630 would be the highest ranked candidate. Therefore, the change indicated at 630 is the most likely reason for failing tests T4, T6.

In another embodiment, the following steps can be performed.
1. In a first phase, individual tests are grouped into test suites that are run together in a batch.
2. A test suite is run and the results for each individual test are stored in a database so that the history of test results is accessible.
3. At time T1 a given test suite TS1 had a set of successful / green tests = green(TS1, T1), and possibly also a set of failing / red tests = red(TS1, T1). Only the green tests are considered for further analysis.
4. Before another run of test suite TS1, a set of source changes SC1 is submitted to the revision control system and thereby enters the test system. These changes will now be in effect for subsequent test runs.
5. At a later point in time T2 > T1, the test suite TS1 is run again. The changes of step #4 took effect between the test runs at T1 and T2.
6. The results of the test TS 1 run at T2 are considered, specifically the subset of NewlyFailedTests NFT(TS1,T2, T1) = red(green(TS1,T1), T2), which is the set of tests that were green in the previous run at T1 but have now turned red (=failed) for T2. This information can be obtained from a history of test results.
7. The code coverage profiles of the NewlyFailedTests(T2) are considered, i.e. specifically which source changes were used by these tests. The set of source changes SC1 is intersected with the code coverage profiles of the NewlyFailedTests(T2) so to obtain a subset of SC1. This intersection is called SC1_failed and it defines the set of changes that may possibly be the cause for a failed test in this run. Changes that are not 'used' by any of the tests would therefore not be in the SC1_failed.
8. In a second phase (which can be implemented in some embodiments), the changes in SC1_failed are ranked by several heuristics to identify the most likely cause (=source change) for the failing test/tests. This produces e.g., a list where the most likely cause is listed at the top. The heuristics used are as follows:
   a. For each source change in SC1_failed, count the number of 'red tests' that exercised/used this source (code, configuration etc.). The one with the highest number is the most likely cause.
   b. For each source change in SC1_failed, count not only the red but also the green tests that used this source. The ranking is defined by the ratio of red/green tests. The source change with the highest ratio is the most likely cause.
   c. Consider the size of the source change, e.g. the number of lines / items changed. The 'largest change' is the most likely cause.
   d. Consider the number of source changes in each failed test and divide it by the total size of the code used (=covered) in the test. A source change in a small code coverage profile has a higher probability of impact than the same change in a very large code coverage profile.

These heuristics can be combined in different ways, and additional heuristics are possible.

In summary, this algorithm yields a sorted list of the most likely causes for failing tests so that the defect analysis can focus on these and be much more efficient.

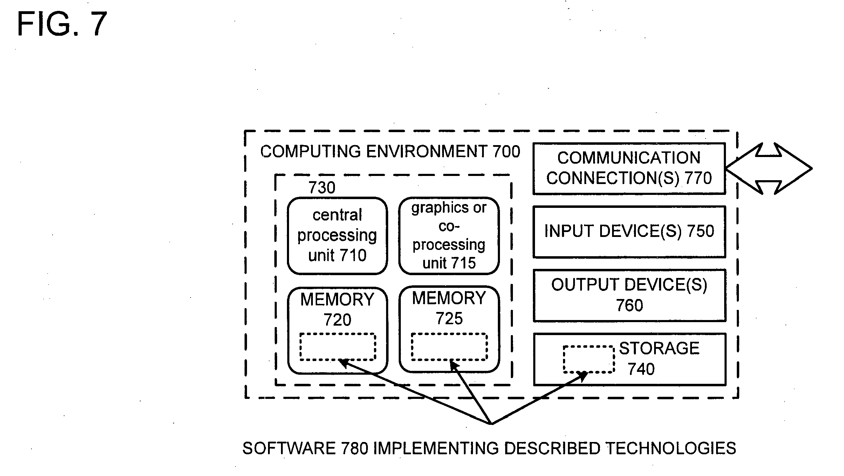

With reference to FIG. 7, the computing environment 700 includes one or more processing units 710, 715 and memory 720, 725. In FIG. 7, this basic configuration 730 is included within a dashed line. The processing units 710, 715 execute computer-executable instructions. A processing unit can be a general-purpose central processing unit (CPU), processor in an application-specific integrated circuit (ASIC) or any other type of processor. In a multi-processing system, multiple processing units execute computer-executable instructions to increase processing power. For example, FIG. 7 shows a central processing unit 710 as well as a graphics processing unit or co-processing unit 715. The tangible memory 720, 725 may be volatile memory (e.g., registers, cache, RAM), non-volatile memory (e.g., ROM, EEPROM, flash memory, etc.), or some combination of the two, accessible by the processing unit(s). The memory 720, 725 stores software 780 implementing one or more innovations described herein, in the form of computer-executable instructions suitable for execution by the processing unit(s). For example, the software 780 can include the defect localization tool 140.

A computing system may have additional features. For example, the computing environment 700 includes storage 740, one or more input devices 750, one or more output devices 760, and one or more communication connections 770. An interconnection mechanism (not shown) such as a bus, controller, or network interconnects the components of the computing environment 700. Typically, operating system software (not shown) provides an operating environment for other software executing in the computing environment 700, and coordinates activities of the components of the computing environment 700.

The tangible storage 740 may be removable or non-removable, and includes magnetic disks, magnetic tapes or cassettes, CD-ROMs, DVDs, or any other medium which can be used to store information in a non-transitory way and which can be accessed within the computing environment 700. The storage 740 stores instructions for the software 780 implementing one or more innovations described herein.

The input device(s) 750 may be a touch input device such as a keyboard, mouse, pen, or trackball, a voice input device, a scanning device, or another device that provides input to the computing environment 700. The output device(s) 760 may be a display, printer, speaker, CD-writer, or another device that provides output from the computing environment 700.

The communication connection(s) 770 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions stored on one or more computer-readable storage media (e.g., one or more optical media discs, volatile memory components (such as DRAM or SRAM), or non-volatile memory components (such as flash memory or hard drives)) and executed on a computer (e.g., any commercially available computer, including smart phones or other mobile devices that include computing hardware). The term computer-readable storage media does not include communication connections, such as signals and carrier waves. Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C++, Java, Perl, JavaScript, Adobe Flash, or any other suitable programming language. Likewise, the disclosed technology is not limited to any particular computer or type of hardware. Certain details of suitable computers and hardware are well known and need not be set forth in detail in this disclosure.

It should also be well understood that any functionality described herein can be performed, at least in part, by one or more hardware logic components, instead of software. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and subcombinations with one another. The disclosed methods, apparatus, and systems are not limited to any specific aspect or feature or combination thereof, nor do the disclosed embodiments require that any one or more specific advantages be present or problems be solved.

In view of the many possible embodiments to which the principles of the disclosed invention may be applied, it should be recognized that the illustrated embodiments are only preferred examples of the invention and should not be taken as limiting the scope of the invention. Rather, the scope of the invention is defined by the following claims. We therefore claim as our invention all that comes within the scope of these claims.

## Claims

1. A method of detecting software defects during integration testing associated with code of a system, comprising:
during a first period of time, performing a first integration test on the code using a test suite including a plurality of individual tests, wherein at least a portion of the individual tests pass the first integration test;
receiving changes to the code to generate an updated version of the code and first code locations that identify portions of the code that changed;
performing a second integration test on the updated version of the code using the test suite during a second, later period in time, wherein at least some of the individual tests fail the second integration test;
for the individual tests that passed during the first period of time but failed during the second period of time, receiving second code locations that were exercised by the individual tests; and
matching the first code locations that changed after the first period of time and the second code locations that were exercised during the second integration tests to detect candidate defects in the code.

2. The method of claim 1, further including ranking the candidate defects in a priority order based on a most likely candidate defect, optionally
wherein the ranking is determined by counting, for each portion of the code that changed, a number of individual tests that exercised that portion of the code and failed.

3. The method of claim 2, wherein the ranking is determined by counting, for each portion of the code that changed, a first number of individual tests that exercised that portion of the code and failed, and a second number of individual tests that exercised that portion of the code and passed, and calculating a ratio of the first number and the second number.

4. The method of claim 2 or 3, wherein the ranking is determined based on sizes of changed portions of the code that failed; and/or
wherein the ranking is determined based on a number of the portions of code that changed in a failed test.

5. The method of any one of claims 1 to 4, wherein the code includes source code and object code and the first code locations are in the source code and the second code locations are in the object code, and wherein the first and second code locations correspond to a same portion of code.

6. The method of any one of claims 1 to 5, wherein the code includes source code and configuration files associated with the source code.

7. The method of any one of claims 1 to 6, wherein performing the first and second integration tests includes running a test system using the test suite as an input; and/or
wherein receiving changes to the code includes reading an output file from a revision control system.

8. A computer-readable storage having encoded therein computer-executable instructions for causing a computing system programmed thereby to perform a method comprising:
receiving first and second integration test results for first and second integration test runs that each use a suite of individual tests on first and second versions of code, respectively;
comparing the first integration test results to the second integration test results to determine a set of the individual tests that passed on one and failed on the other;
for the determined set of individual tests, receiving coverage data indicating which locations of the second version of the code were executed during the second integration test run;
identifying change locations indicative of updates to the first version of the code; and
comparing the change locations to the coverage data to determine which updates were also tested during the second integration test run.

9. The computer-readable storage of claim 8, wherein the updates occurred between the first integration test run and the second integration test run.

10. The computer-readable storage of claim 8 or 9, further comprising executing the first and second integration test runs including grouping the individual tests into the suite of individual tests for use in a test system.

11. The computer-readable storage of any one of claims 8 to 10, wherein the comparing of the first integration test result and the second integration test result includes determining which of the suite of individual tests passed on the first integration test run and then failed on the second integration test run.

12. The computer-readable storage of any one of claims 8 to 11, wherein comparing the change locations to the coverage data includes mapping a line or procedure associated with the change locations to the same line or procedure in the coverage data.

13. The computer-readable storage of any one of claims 8 to 12, further including generating a list of the most likely change locations to cause an error resulting in a failure of at least one individual test, optionally
wherein the list is ranked based on one or more heuristics including ranking each change location based on a number of times it was matched against the coverage data.

14. A system for detecting code defects in integration testing, comprising:
a revision control system that tracks source code changes;
a test system coupled to the revision control system for receiving code to test;
at least one database coupled to the test system storing results of at least first and second integration tests; and
a defect localization tool coupled to the at least one database and the revision control system for matching location information associated with source code and/or configuration data that was revised after the first integration test with location information of code and/or configuration data that was exercised during the second integration test.

15. The system of claim 14, wherein the defect localization tool generates a prioritized list of candidate revisions in the source code and/or configuration data, optionally
wherein the defect localization tool is coupled to memory for reading a priority control document that controls how priority is calculated.
